# EUROPEAN PATENT SPECIFICATION

(11) **EP 2 390 861 B1**
(45) Date of publication and mention of the grant of the patent: **15.03.2017**
(21) Application number: 10163955.7
(22) Date of filing: 26.05.2010
(51) Int. Cl.: G08G 1/0968, G01C 21/34, G06Q 30/00, G08G 1/01, G08G 1/123, G07C 5/00, G06Q 30/02, G08G 1/00, G08G 1/0967, G08G 1/0969

(54) **Method and system for traffic control and traffic emission control**
Verfahren und System zur Verkehrssteuerung und Verkehrsemissionssteuerung
Procédé et système de contrôle de trafic et contrôle d'émission de trafic

(43) Date of publication of application: 30.11.2011
(73) Proprietor: Deutsche Telekom AG, 53113 Bonn (DE)
(72) Inventor: Willenbrock, Ralf, 100125, Beijing P.R. (CN); Ayyildiz, Kemal, 100125, Beijing P.R. (CN)
(74) Representative: 2K Patentanwälte Blasberg Kewitz & Reichel

(56) References cited:
- EP-A1- 1 811 481
- WO-A2-2008/032075
- DE-A1- 10 055 059
- DE-A1-102007 014 684
- DE-A1-102008 041 293
- US-A1- 2004 039 517
- US-A1- 2004 093 264

## Description

The invention relates to method and system for traffic control and traffic pollution control. Furthermore a system and a method for tracking the traffic and the related pollution is proposed, which encourage people to travel in low emission zones, thus reducing the traffic congestion and emissions in high emission zones.

### Field of the Invention

With the fast development of urbanization and the rapid growth of automobile industry, many cities around the world are facing severe problems with traffic congestion and related CO2 emissions. Many mega-cities around the world are undergoing an ultra-fast urbanization stage; their land use patterns and street networks, however, are incapable of accommodating the booming amount of automobiles and trucks. Despite having extensive public transit systems, these cities are experiencing growing demand for both automobile and truck travel which cannot be handled efficiently by the available road network.

As a result, policy makers and city planners of many cities are considering introducing road charging strategies to manage travel demand in congested urban areas and to produce extra funding for expanding transportation infrastructure. Many studies have shown that people react sensitively in their mobility behavior, whenever additional costs are involved. Travel demand management by means of urban road charging combined with dynamic parking fees has proved effective in easing inner urban congestion and related pollution.
US2004039517 relates to an integrated traffic surveillance system having devices for measuring environmental and weather data, having traffic sensors, and a traffic surveillance control centre for storing and processing the detected data, and communication devices for carrying out the data exchange with the measuring devices and with the data users. The invention also relates to a driver assistance system which operates autonomously or is part of the integrated traffic surveillance system. It is proposed according to the invention that in order to reduce the environmental pollution the integrated traffic surveillance system and/or the driver assistance system take actions to control a traffic system. The control actions comprise the output of information, warnings and/or recommendations to road-users, interventions in the infrastructure and/or interventions in the vehicle. The invention also relates to a digital map which is part of the integrated traffic surveillance system and/or the driver assistance system. It is proposed according to the invention that immission data are stored as attributes in the digital map

### Background of Invention

However, such schemes cannot be easily transferred to all cities around the world. As for China, the automotive industry is at its early stage and road charging would be too unpopular for local traffic authorities and government. Therefore, instead of charging, an alternative electronic solution is required to convince to drives to use alternative routes or traffic means.

### Summary of Invention

The above goal is accomplished by a method for traffic control according to claim 1 and a communication server for traffic control according to claim 15.

To track the pollution and emission in a specific zone, a fleet of floating cars will be equipped with a mobile device integrated with a GPS receiver. Therefore, the traffic and emission condition of the urban road network can be monitored and the high/low emission zone can be defined. By implementing a calculation algorithm, each trip is recorded and analyzed, and at the end of each trip, an electronic bonus is given to the driver which can be used to transfer it electronically to pay parking fees or to pay public transportation means. The high/low emission zones defined can also be used by the public authorities to adjust the parking fee dynamically. This can be achieved by transmitting the new parking fees to parking meters, which store the new fees in an internal memory and adjust the fees automatically. In case that human parking guard is responsible for the ticketing and not a parking meter he will receive the updated fees on his mobile phone. Also he can check the bonus by typing it into his mobile phone (for example sending it as sms) or connecting to website. The numbers of the mobile phones of the human parking guard can be grouped to up facilitate an update procedure. It is also possible to compare the paper bills of their monthly statement with the mobile bonus which the profession driver have received.

It is also possible to convert the bonus into another virtual currency like for example web-miles. In another embodiment web-miles are also generated when receiving a dedicated number of bonuses.

The invention can be based on using floating car data (FCD) to detect traffic disturbances, which has been studied in traffic researches for more than 30 years. Nowadays it requires much less investment to set up floating car fleets compared to earlier times. It is also possible to use fixed traffic data collecting means, like cameras, induction sensors, optical sensors etc. Another possibility is to use sensors that capture the emission or pollution. All the information are collected in a central system to generate and update a digital map with emission information.

The invention suggests equipping a number of floating cars with GPS-integrated mobile phones / mobile terminals. The mobile phone is installed with an advanced telematics platform which not only records the speed data, but also estimates CO2 emissions. Nowadays, more and more models of mobile phones are coming into the market with integrated GPS receiver and the price is dropping tremendously. Furthermore, GPS and mobile technology (GSM/GPRS) have reached high coverage in most countries around the world. The calculation can be done on board or off board. For example the mobile device can inform the central system about the position in a regular time interval or the speed and the position and the type of car or other identity information to enable the central system to calculate the emission. Together with the information of the other members of the floating cars fleet a presumption of the emission can be made. For example if a certain numbers of cars of the fleet drive very slowly in a certain street it is presumed that a lot of emission is emitted. In a digital map these streets are weighted with a higher score than other streets. If a car passes this street it accumulates a higher total score as if it drives a bypass. The higher the total score is the lower is for example the refund or the deduction of the parking fees or public transportation fees or other types of bonus. The score is calculated in the central system or on the mobile device. For the onbaord solution the updated weighted map information are transferred via a wireless network to the mobile device.

In a possible embodiment to avoid any misuse the digital bonus can only be used in the surrounding of the final destination. The driver indicates manually or the car automatically that the final destination has be reached. By transmitting a bonus with an encoded area code the drive can only use the digital bonus in the corresponding area. It is also possible that the parking meters in a certain area work only with a defined code, which is incorporated in the bonus data. The bonus data can be transmitted as sms or email or other instant messaging service. It can also be transferred to an online account. From there it can be forwarded to the parking meter. It is also possible that the bonus data is transferred via blue tooth or sms to the parking meter. If the parking meter has a keyboard it is also possible to manually type in the code.

Take Beijing as an example, a fleet of 5,000 taxis equipped with GPS receivers is able to cover a road network of 4000 km within one minute, which is almost the total length of the road network of Beijing urban area.

In addition to the speed data that is recorded by the receiver, CO2 emissions can be derived from the GPS data, which is called the emission modeling system (EMS). The fuel consumption can be calculated given that the characteristic of a vehicle is known and the speed and acceleration of a trip is recorded. It is also known that 1 liter of fuel results in approximately 2.4 kg of CO2 emissions.

By comparing traffic volume and traffic flow speed, the model will generate an urban traffic-related emission map in form of yellow / green / red colored graphical layers, indicating different CO2 emission conditions within the road network. This information is transmitted to the mobile device and displayed on a screen. The user can than decide which route he chooses to get the highest bonus. In a preferred embodiment the bonus is calculate be comparing the emission of the alternative route with the emission emitted when using the standard route through the heavy traffic.

Based on the historic and real time data collected, inner-urban high/low emission zones can be defined in time and space. The high/low emission zones can be:
1. offered to environmental protection offices as dynamic monitoring of CO2 emissions and traffic related air pollution;
2. offered to traffic authorities to determine dynamic parking fee;
3. distributed to travelers via internet / mobile internet to manage travel demand, i.e. the high emission zones also means high fuel consumption areas.

The emission data generated in the previous phase can be utilized to develop, introduce and operate a mobile phone based traffic demand management system which informs drivers about roads of increased fuel consumption and CO2 emissions and gives bonus credits for parking to those who travel in low emission zones.

Based on the high/low emission zones defined in the previous phase, each trip recorded by the GPS receiver is analyzed and a bonus algorithm is implemented to calculate the positive and negative bonus credits that one wins. This is a similar process transferred from the German GPS-based toll collecting technology. Driving in low emission zones will create bonus credits, while driving in high emission zones will originate costs, diminishing the bonus credits. At the end of each trip, the generated bonus as well as the parking fee per hour will be shown on the mobile phone.

As the emission zones are indicated on the mobile phones, the drivers can plan their trips to avoid the high emission zones so that they can earn bonus for their parking; or they can park their cars outside of high emission zones and change to public transport, since they know parking in high emission zones are expected to be expensive. Thus, the purpose of reducing travel demand in congested and high emission areas is achieved.

Travel demand management is highly sensitive to costs. As urban road charging solutions are difficult to implement, but proved to be very efficient a bonus credit solution in combination with low emission zones is provided. Drivers who agree to deliver GPS profiles to the data centre can receive a bonus payment to reduce their parking fee. Additionally, traffic and environment authorities can use the GPS profiles to design low emission zones and re-adjust parking fee policy.

### Brief Description of Drawings

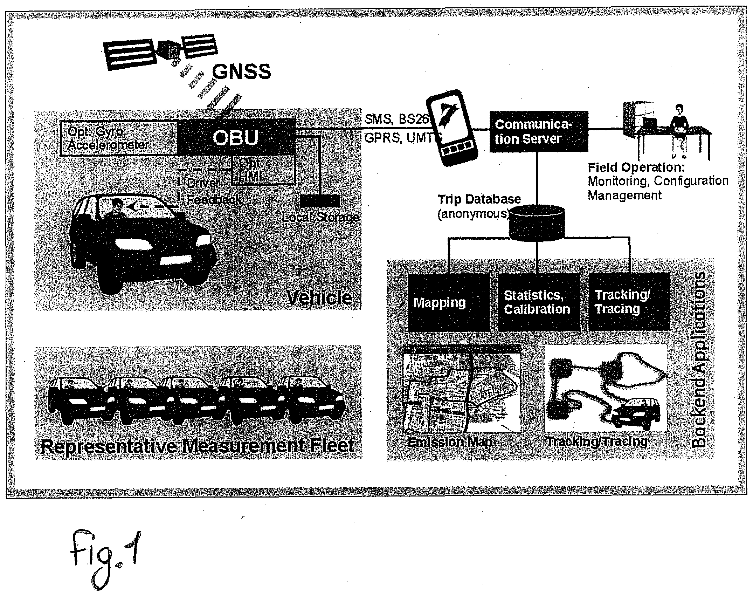

The fig 1 shows a system implementing the invention. It comprises a single vehicle which can be part of a representative measurement fleet, which records and stores data for a communication server.

### Detailed Description of Preferred Embodiments

Fig 1 shows a vehicle having an OBU (onboard unit), comprising a local storage for collecting data or storing the map data. Furthermore the local storage can be used to store the programs running on the OBU and for caching information which cannot be transmitted over the wireless network. The OBU has a GPS receiver to receive GNSS from GPS- satellites. Furthermore an optical gyro or accelerometer is installed to determine the behaviour of the car and its speed. Over and optical HMI (humane machine interface) the driver gets information about the actual emission situation. This information can be presented on a digital map differently coloured to indicate different emission situations. In a preferred embodiment only the streets in the surrounding of the position of the car are displayed. In another preferred embodiment the OBU calculates an optimal route based on the emission information provided by a communication server. In this calculation not only the shortest way or a possible by bass is taken into account also the number of traffic lights, the average speed, the density of the traffic, the number of stop to and goes (before junctions, branches and traffic lights) is considered to calculate the possible minimal emission. The minimum emission is given when the car runs in an average constant speed between 50-90 km/h without or with a few interruptions. In an alternative algorithm also the costs of the parking fees and a possible use of public transportation is considered. The driver indicates in his navigation system, that he intends to use a public parking at the final destination. In this case the possible costs and the bonus of the parking is calculated and compared with the costs of public transportation. Furthermore alternative public parking lots are offered which are close to the destination but which cause less emission or which are cheaper due to the less emission in the surrounding. This amended algorithm allows the driver to get feedback about the situation in the streets and the parking lots.

All this information are exchanged via a wireless network using SMS, GPRS, UMTS, BS26, Email, IP, Edge etc with a communication server. This communication server has access to a trip database which stores in a preferred embodiment the emission map, the tracking of the cars and the statistics. To store the data in an emission map a mapping module is use. To store the tracking date a tracking module is used. To control the system a field operation system is used, which allows monitoring, configuring and managing the system. To get representative data a measurement fleet is used, which informs the communication server about the actual situation in the streets. The measurement fleet must not have identical OBUs as described above. Taxi drivers for example do not look for parking lots or similar parking places. Consequently the taxis need simpler OBU. For the fleet cars a simple one way communication might be sufficient informing the communication server about the actual situation on the streets. Furthermore the communication server can be responsible to send the bonus to a mobile device or the OBU or to a digital bank account, for which digital identification information is stored in a databank.

## Claims

1. Method for traffic control by controlling traffic emission, using a communication server, which maintains a digital emission map in a storage device of a defined geographical region and which updates the emission map by external sources, comprising the steps:
- providing data of the emission map to an onboard unit, OBU, in a car via a wireless network,
- calculation of a alternative route by bypassing areas which are highly impacted by emissions,
- tracking of the alternative route of the car by receiving tracking information of the car and transferring the tracking information to the communication server,
- calculation of a digital bonus for digital payment by the communication server based on the alternative route, and transferring the digital bonus to a digital account, the onboard unit, OBU, or mobile device, to be usable for digital payment of parking meters or public transportation by transferring the digital bonus to the parking meters or ticketing vending machine.

2. The method according to claim 1, wherein the digital bonus is coded so that it can only be used at in the surrounding of the final location of the car, for payment of parking meters, payment of public transportation.

3. The method according to claim 1, wherein the bonus is a Digital code, being transmitted as sms, email, mms, instant message, being receivable by a mobile terminal.

4. The method according to claim 1, wherein the digital code can be forwarded via blue tooth, sms, email, mms, instant message to the parking meter.

5. The method according to claim 1 to 4, wherein the communication server adapts the fees of the parking meters in areas which are strongly impacted by emissions.

6. The method according to claim 1 to 5, wherein the digital bonus can be used to be transferred to ticketing vending machine for payment of public transportation means.

7. The method according to claim 1 to 6, wherein a representative measurement fleet transfers information about the traffic conditions to the communication server to update the digital emission map.

8. The method according to claim 1 to 7, wherein the communication server generates information by comparing traffic volume, traffic flow speed, acceleration and/or fuel consumption, will then generate data for an urban traffic-related emission map, which can be display on a display device in a car.

9. The method according to claim 8, wherein historic and real time data are collected to define inner-urban high/low emission zones in time and space in the emission map.

10. The method according to claim 8, wherein the map is displayed in colored graphical layers, indicating different CO2 emission conditions within the road network.

11. The method according to claim 1 to 10, wherein the OBU calculates an optimal route based on the emission information provided by a communication server, to avoid passing through the high emission zones.

12. The method according claim 11, wherein the calculation takes into account, the high emission zones, the shortest way, the number of traffic lights, the average speed, the density of the traffic and/or the number of stop to and goes before junctions branches and/or traffic lights.

13. The method according claims 11 or 12, wherein parking fees are transmitted to the OBU and the route calculation also takes into account the costs of the parking fees at the destination and a/or a possible use of public transportation is considered.

14. The method according claims 11 or 13, wherein the OBU searches and displays alternative public parking lots which are close to the destination but which cause less emission output or which are cheaper due to the less emission in the surrounding or the higher bonus and/or the transmitted parking fees.

15. Communication server for traffic control by controlling traffic emission comprising:
- a storage device to store a digital emission map of a defined geographical region;
- network interface to receive updates of traffic and/or emission information;
- a processing unit which is configured to update the emission map using information of external sources, and which is configured to provide data of the emission map to an on board unit, OBU, in a car via the network interface card,
which is configured to track the routes and alternative routes of the car by receiving tracking information of the car and which is configured to calculate a digital bonus for digital payment based on the selection of an alternative route bypassing an area being highly impacted by emission by the communication server, and to transfer the digital bonus to a digital account, the onboard unit, OBU, or mobile device via the network interface, to be usable for the digital payment of parking meters or public transportation by transferring the digital bonus to the parking meter or ticketing vending machine.

16. The communication server according claim 15, wherein the processing unit adapts the fees of the parking meters in areas which are strongly impacted by emissions and transfers the information to the parking meter.

17. The communication server according claim 15, wherein the processing is configured to adapt the fees of the parking meters in areas which are strongly impacted by emissions and transfers the information to the parking meter.

18. The communication server according claim 15, wherein the processing unit is configured to code the digital bonus so that it can only be used at in the surrounding of the final location of the car, for payment of parking meters, payment of public transportation.

## Patentansprüche

1. Verfahren zur Verkehrssteuerung durch Steuern der Verkehrsemission unter Verwendung eines Kommunikationsservers, der eine digitale Emissionskarte einer definierten geographischen Region in einer Speichereinrichtung verwaltet und der die Emissionskarte durch externe Quellen aktualisiert,
Umfassend die Schritte:
- Bereitstellen von Daten der Emissionskarte einer Bordeinheit, OBU, in einem Fahrzeug über ein drahtloses Netzwerk,
- Berechnung einer alternativen Route durch Umfahrung von stark von Emissionen betroffenen Gebieten,
- Verfolgen der alternativen Route des Fahrzeugs durch Empfangen von Verfolgungsinformationen des Fahrzeugs und Übertragen der Verfolgungsinformationen an den Kommunikationsserver,
- Berechnung eines digitalen Bonus für die digitale Zahlung durch den Kommunikationsserver basierend auf der alternativen Route und Übertragung des digitalen Bonus an ein digitales Konto, die Bordeinheit, OBU, oder das mobile Gerät ist, der verwendbar ist, für die digitale Zahlung von Parkuhren oder öffentlichen Verkehrsmitteln ist, durch Übertragen des digitalen Bonus auf die Parkuhren oder den Fahrkartenautomaten.

2. Das Verfahren nach Anspruch 1, wobei der digitale Bonus so kodiert ist, dass er nur in der Umgebung der endgültigen Position des Fahrzeugs zur Zahlung von Parkuhren oder Zahlung von öffentlichen Verkehrsmitteln verwendbar ist.

3. Das Verfahren nach Anspruch 1, wobei der Bonus ein digitaler Code ist, der als SMS, E-Mail, MMS, Instant Message übermittelt wird, der durch ein mobiles Endgerät empfangbar ist.

4. Das Verfahren nach Anspruch 1, wobei der digitale Code über Blue-Tooth, SMS, E-Mail, MMS, Instant Message an die Parkuhr weitergeleitet werden kann.

5. Das Verfahren nach einem der Ansprüche 1 bis 4, wobei der Kommunikationsserver die Gebühren der Parkuhren in Gebieten anpasst, die stark durch Emissionen beeinträchtigt werden.

6. Das Verfahren nach einem der Ansprüche 1 bis 5, wobei der digitale Bonus verwendet werden kann, um an die Fahrkartenautomaten zur Zahlung von öffentlichen Verkehrsmitteln übertragen zu werden.

7. Das Verfahren nach einem der Ansprüche 1 bis 6, wobei eine repräsentative Messflotte Informationen über die Verkehrssituation an den Kommunikationsserver überträgt, um die digitale Emissionskarte zu aktualisieren.

8. Das Verfahren nach einem der Ansprüche 1 bis 7, wobei der Kommunikationsserver Informationen durch Vergleich von Verkehrsaufkommen, Verkehrsflussgeschwindigkeit, Beschleunigung und / oder Kraftstoffverbrauch erstellt, und dann Daten für eine stadtverkehrsbezogene Emissionskarte erstellt, die auf einer Anzeigevorrichtung in einem Fahrzeug angezeigt werden kann.

9. Das Verfahren nach Anspruch 8, wobei historische und Echtzeitdaten gesammelt werden, um innerstädtische hohe / niedrige Emissionszonen in Zeit und Raum in der Emissionskarte zu definieren.

10. Das Verfahren nach Anspruch 8, wobei die Karte in farbigen grafischen Ebenen angezeigt wird, die unterschiedliche CO2-Emissionsbedingungen innerhalb des Straßennetzes angeben.

11. Das Verfahren nach einem der Ansprüche 1 bis 10, wobei die OBU eine optimale Route basierend auf den Emissionsinformationen, die von dem Kommunikationsserver bereitgestellt werden, berechnet, um ein Durchfahren der hohen Emissionszonen zu vermeiden.

12. Das Verfahren nach Anspruch 11, wobei die Berechnung die hohen Emissionszonen, den kürzesten Weg, die Anzahl der Ampeln, die Durchschnittsgeschwindigkeit, die Dichte des Verkehrs und / oder die Anzahl von stop to and goes vor Abzweigungen und / oder Ampeln, berücksichtigt.

13. Das Verfahren nach Anspruch 11 oder 12, wobei Parkgebühren an die OBU übermittelt werden und die Routenberechnung auch die Preise der Parkgebühren am Ziel berücksichtigt und / oder eine mögliche Nutzung von öffentlichen Verkehrsmitteln in Betracht gezogen wird.

14. Das Verfahren nach Anspruch 11 oder 13, wobei die OBU alternative, öffentliche Parkplätze, die in der Nähe des Zielortes sind aber die geringere Emissions-Leistung verursachen oder die günstiger aufgrund von weniger Emission in der Umgebung sind oder den höheren Bonus und / oder die übermittelten Parkgebühren, sucht und anzeigt.

15. Kommunikationsserver zur Verkehrssteuerung durch Steuern der Verkehrsemission, umfassend:
- eine Speichereinrichtung zum Speichern einer digitalen Emissionskarte einer definierten geographischen Region;
- Netzwerkschnittstelle zum Empfangen von Aktualisierungen von Verkehrs- und / oder Emissionsinformationen;
- eine Verarbeitungseinheit, die konfiguriert ist, um die Emissionskarte unter Verwendung von Informationen aus externen Quellen zu aktualisieren,
und die konfiguriert ist, um Daten der Emissionskarte an eine Bordeinheit, OBU, in einem Fahrzeug über die Netzwerkschnittstellenkarte bereitzustellen,
die konfiguriert ist, um die Routen und alternativen Routen des Fahrzeugs durch Empfangen von Überwachungsinformationen des Fahrzeugs zu verfolgen, und die konfiguriert ist, um einen digitalen Bonus für die digitale Zahlung durch den Kommunikationsserver zu berechnen, basierend auf der Auswahl einer alternativen Route, die ein Gebiet, das stark durch die Emission beeinträchtigt ist, zu umgehen, und um den digitalen Bonus auf ein digitales Konto, die Bordeinheit, OBU oder das mobile Gerät über die Netzwerkschnittstelle zu übertragen, um für die digitale Zahlung von Parkuhren oder öffentlichen Verkehrsmitteln durch Übertragung des digitalen Bonus an die Parkuhr oder den Fahrkartenautomat verwendbar zu sein.

16. Der Kommunikationsserver nach Anspruch 15, wobei die Verarbeitungseinheit die Gebühren der Parkuhren in Gebieten anpasst, die stark durch Emissionen beeinträchtigt sind und die Informationen an die Parkuhr überträgt.

17. Der Kommunikationsserver nach Anspruch 15, wobei die Verarbeitung so konfiguriert ist, um die Gebühren der Parkuhren in Gebieten anzupassen, die stark durch Emissionen beeinträchtigt sind und die Informationen an die Parkuhr überträgt.

18. Der Kommunikationsserver nach Anspruch, wobei die Verarbeitungseinheit so konfiguriert ist, um den digitalen Bonus zu verschlüsseln, so dass der nur in der Umgebung des Zielorts des Fahrzeugs, zur Zahlung von Parkuhren, Zahlung von öffentlichen Verkehrsmitteln verwendet werden kann.

## Revendications

1. Un procédé de contrôle de trafic par le contrôle de l'émission de trafic, en utilisant un serveur de communication, lequel maintient dans un dispositif de stockage une carte d'émission numérique d'une région géographique définie et qui met à jour la carte d'émission au moyen de sources externes,
comprenant les étapes :
- la fourniture de données de la carte d'émission à une unité embarquée, OBU, dans un véhicule via un réseau sans fil,
- le calcul d'une route alternative par des aires de détournement qui sont hautement impactées par les émissions ;
- le suivi de la route alternative du véhicule en recevant de l'information de suivi du véhicule et le transfert de l'information de suivi au serveur de communication,
- le calcul par le serveur de communication d'un bonus numérique pour un paiement numérique sur la base de la route alternative, et le transfert du bonus numérique à un compte numérique, l'unité embarquée, OBU, ou le dispositif mobile, pour être utilisable pour un paiement numérique de parcmètres ou de transport public par le transfert du bonus numérique aux parcmètres ou à une machine de vente de tickets.

2. Le procédé selon la revendication 1, dans lequel le bonus numérique est codée de manière à pouvoir être seulement utilisé dans le voisinage de l'emplacement final du véhicule, pour un paiement de parcmètres, un paiement de transport public.

3. Le procédé selon la revendication 1, dans lequel le bonus est un code numérique, qui est transmis à par SMS, courriel, mms, message instantané , qui est reçu par un terminal mobile.

4. Le procédé selon la revendication 1, dans lequel le code numérique peut être transféré via blutooth, sms, courriel, mms, message instantané, vers le parcmètre.

5. Le procédé selon la revendication 1 à 4, dans lequel le serveur de communicaitoni adapte les redevances des parcmètres dans des zones qui sont fortement impactés par les émissions.

6. Le procédé selon la revendication 1 à 5, dans lequel le bonus numérique peut être utilisé pour être transféré à une machine de vente de ticket pour le paiement de moyens de transport publics.

7. Le procédé selon la revendication 1 à 6, dans lequel une flotte de mesure représentative transfère de l'information concernant les conditions de trafic au serveur de communication pour la mise à jour de la carte d'émission numérique.

8. Le procédé selon la revendication 1 à 7, dans lequel le serveur de communication génère de l'information en comparant le volume de trafic, la vitesse de trafic, l'accélération et/ou la consommation de carburant, qui ensuite génère des données pour une carte d'émission relative au trafic urbain, qui peuvent être affichées sur un dispositif d'affichage dans un véhicule.

9. Le procédé selon la revendication 8, dans lequel des données en temps réelles et passées sont rassemblées pour définir les zones d'émission hautes/faibles en centre urbain, dans l'espace et le temps dans la carte d'émission.

10. Le procédé selon la revendication 8, dans lequel la carte est affichée en couches graphiques colorées, indiquant différentes conditions d'émission CO2 au sein du réseau routier.

11. Le procédé selon la revendication 1 à 10, dans lequel le OBU calcule une route optimale sur la base de l'information d'émission fournie par un serveur de communication, pour évider le passage au travers des zones d'émission intenses.

12. Le procédé selon la revendication 11, dans lequel le calcul prend en considération, les zones d'émission élevées, le chemin le plus court, le nombre de feux tricolores, la vitesse moyenne, la densité de trafic et/ou le nombre d'arrêt/démarrage entre des branches de jonction et/ou les feux tricolores.

13. Le procédé selon la revendication 11 ou 12, dans lequel les redevances de parking sont transmises vers le OBU et le calcul de la route prend également en considération les coûts de parking au lieu de destination et/.ou une utilisation éventuelle de transport public.

14. Le procédé selon la revendication 11 ou 13, dans lequel le OBU recherche et affiche des ensembles de parking public alternative qui sont proches de la destination mais qui entraîneraient moins d'émission ou qui seraient meilleur marché en raison d'une émission moindre dans le voisinage ou le bonus plus élevé et/ou les redevances de parking transmises.

15. Un serveur de communication pour un contrôle de trafic par le contrôle de l'émission de trafic, comprenant :
- un dispositif de stockage pour le stockage d'une carte d'émission numérique d'une zone géographique définie ;
- une interface de réseau pour recevoir des mises à jour de trafic et/ou d'information d'émission ;
- une unité de traitement qui est configurée pour mettre à jour la carte d'émission en utilisant l'information de sources externes, et qui est configurée pour fournir des données de la carte d'émission à une unité embarquée, OBU, d'un véhicule via la carte d'interface réseau, qui est configurée pour le suivi des routes et des routes alternatives du véhicule par la réception d'une information de suivi du véhicule, et qui est configurée pour calculer par le serveur de communication un bonus numérique pour un paiement numérique sur la base de la sélection d'une route alternative contournant une zone hautement impactée par des émissions, et pour transférer le bonus numérique à un compte numérique, l'unité embarquée OBU, ou un dispositif mobile via l'interface de réseau, pour être utilisable pour un paiement numérique de parcmètres ou de transport public par le transfert du bonus numérique vers le parcmètre ou vers une machine de vente de tickets.

16. Le serveur de communication selon la revendication 15, dans lequel l'unité de traitement adapte les redevances des parcmètres dans les zones qui sont fortement impactées par les émissions et transfère l'information au parcmètre.

17. Le serveur de communication selon la revendication 15, dans lequel le traitement est configuré pour adapter les redevances des parcmètres dans les zones qui sont fortement impactées par les émissions et transfère l'information au parcmètre.

18. Le serveur de communication selon la revendication 15, dans lequel l'unité de traitement est configurée pour coder le bonus numérique de façon à ce qu'il puisse être uniquement utilisé dans le voisinage de la localisation finale du véhicule, pour le paiement de parcmètres, le paiement de transport public.
